# EUROPEAN PATENT APPLICATION

(11) **EP 4 822 580 A1**
(43) Date of publication of application: **14.10.2026**
(21) Application number: 26167198.6
(22) Date of filing: 24.03.2026
(51) Int. Cl.: G06F 30/17, G06F 30/23, G06F 111/10

(54) **SYSTEMS AND ASSOCIATED METHODS FOR COMPONENT DESIGN BASED ON STRESS BASED MODAL ASSURANCE CRITERION**

(30) Priority: 08.04.2025 US 202519172966
(71) Applicant: RTX Corporation, Farmington, CT 06032 (US)
(72) Inventor: MULLER, Kyle, Farmington, Connecticut, 06032 (US); OWEN, William D., Farmington, Connecticut, 06032 (US); CHIZINSKI, Steven, Farmington, Connecticut, 06032 (US); HALL, Benjamin D., Farmington, Connecticut, 06032 (US)
(74) Representative: Dehns

(57) **Abstract**

A system for evaluating fatigue for a component design may be collectively operable to execute an evaluation environment, which may be operable to access a baseline component design associated with a baseline component. A baseline set of finite elements may be associated with a volume of the baseline component design. The evaluation environment may be operable to access a second component design associated with a second component. A second set of finite elements may be associated with a volume of the second component design. The evaluation environment may be operable to calculate at least one stress-based MAC value for the second component design based a comparison between nodal stresses associated with respective corner nodes of the baseline set of finite elements and nodal stresses associated with respective corner nodes of the second set of finite elements. A method for evaluating fatigue for a component design is also disclosed.

## Description

### BACKGROUND

This disclosure relates to establishing and/or validating component designs, including assessing fatigue.

Gas turbine engine components such as airfoils may include complex geometries. The components may be manufactured according to one or more computer-aided design (CAD) models that define the geometry. The geometry may be evaluated by a simulation tool, such as a finite elemental analysis (FEA) tool.

Modal assurance criterion (MAC) may be used to evaluate a vibratory response of a proposed geometry relative to a baseline geometry. MAC may depict a degree of collinearity between two mode shape vectors associated with respective components (e.g., structures) for an associated vibratory mode. A prior displacement-based technique calculates MAC by taking the normalized displacement modal vector of a perturbed structure and the normalized displacement modal vector of the baseline structure and finding the dot product of the two. This normalized dot product gives a numerical value on a scale of 0-1 on how similar the structures are at the specific mode.

### SUMMARY

A system for evaluating fatigue for a component design according to an implementation may include one or more processors coupled to memory. The one or more processors may be collectively operable to execute an evaluation environment. The evaluation environment may be operable to access a baseline component design associated with a baseline component. A baseline set of finite elements may be associated with a volume of the baseline component design. The evaluation environment may be operable to access a second component design associated with a second component that may differ from the baseline component. A second set of finite elements may be associated with a volume of the second component design. The evaluation environment may be operable to calculate at least one stress-based MAC value for the second component design based a comparison between nodal stresses associated with respective corner nodes of the baseline set of finite elements and nodal stresses associated with respective corner nodes of the second set of finite elements. The evaluation environment may be operable to generate an indicator based on the at least one stress-based MAC value.

In any implementations, the second component design may be a derivative of the baseline component design.

In any implementations, the nodal stresses may be associated with a respective set of vibratory modes. The set of vibratory modes may be associated with a steady stress. The at least one stress-based MAC value may include a set of stress-based MAC values associated with the respective modes.

In any implementations, the evaluation environment may be operable to accept the second component design in response to the at least one stress-based MAC value meeting a predetermined criterion, but may reject the second component design in response to the at least one stress-based MAC value not meeting the predetermined criterion.

In any implementations, the nodal stresses may be averages of stress contributions from all elements connected to the respective corner nodes.

In any implementations, the evaluation environment may be operable to calculate a baseline stress vector including components of the nodal stress of the nodes of the baseline set of finite elements. The evaluation environment may be operable to calculate a second stress vector including components of the nodal stress of the nodes of the second set of finite elements. The evaluation environment may be operable to calculate the at least one stress-based MAC value based on the baseline stress vector and the second stress vector.

In any implementations, the evaluation environment may be operable to calculate the at least one stress-based MAC value based on a normalization of the baseline stress vector and the second stress vector with respect to the second stress vector.

In any implementations, a position of one or more of the corner nodes of the baseline set of finite elements may differ from a position of one or more of the corner nodes of the second set of finite elements. The evaluation environment may be operable to map the corner nodes of the second set of finite elements to the corner nodes of the baseline set of finite elements.

In any implementations, the evaluation environment may be operable to interpolate the nodal stresses associated with one or more of the corner nodes of the second set of finite elements based on the mapping.

In any implementations, the baseline component design may be associated with a gas turbine engine component.

A non-transitory computer-readable medium according to an implementation may have computer-executable instructions that, when executed by one or more processors, may cause the one or more processors to collectively access a first component design associated with a first component. A first set of finite elements may be associated with a volume of the first component design. The instructions may cause the one or more processors to collectively access a second component design associated with a second component that may differ from the first component. A second set of finite elements may be associated with a volume of the second component design. The instructions may cause the one or more processors to collectively calculate at least one stress-based MAC value for the second component design based a comparison between nodal stresses associated with respective corner nodes of the first set of finite elements and nodal stresses associated with respective corner nodes of the second set of finite elements. The instructions may cause the one or more processors to collectively determine whether the second component design meets at least one preselected design criterion based on the at least one stress-based MAC value.

In any implementations, the second component design may be a derivative of the first component design.

In any implementations, the nodal stresses may be associated with a respective set of modes. The at least one stress-based MAC value may include a set of stress-based MAC values associated with the respective modes.

In any implementations, the set of modes may include a first mode associated with steady state stress and a second mode associated with vibratory stress.

A method for evaluating fatigue for a component design according to an implementation may include accessing a baseline component design associated with a baseline component. A baseline set of finite elements may be associated with a volume of the baseline component design. The method may include accessing a second component design associated with a second component that may differ from the baseline component. A second set of finite elements may be associated with a volume of the second component design. The method may include calculating at least one stress-based MAC value for the second component design based a comparison between nodal stresses associated with respective corner nodes of the baseline set of finite elements and nodal stresses associated with respective corner nodes of the second set of finite elements, The method may include accepting the second component design based on the at least one stress-based MAC value meeting a preselected threshold, but may include rejecting the second component design in response to the at least one stress-based MAC value being below the preselected threshold.

In any implementations, the second component design may be a derivative of the baseline component design. The nodal stresses may be associated with a respective set of modes. The at least one stress-based MAC value may include a set of stress-based MAC values associated with the respective modes.

In any implementations, the set of modes may include one or more vibratory modes associated with a steady stress. The method may include performing a fatigue assessment of the second component design with respect to fatigue capability.

In any implementations, a position of one or more of the corner nodes of the baseline set of finite elements may differ from a position of one or more of the corner nodes of the second set of finite elements. The method may include mapping the corner nodes of the second set of finite elements to the corner nodes of the baseline set of finite elements. The method may include interpolating the nodal stresses associated with one or more of the corner nodes of the second set of finite elements based on the mapping.

In any implementations the nodal stresses associated with respective corner nodes of the baseline set of finite elements may be associated with experimental data for a physical instance of the baseline component. The method may include validating the results of a finite elemental analysis of the second component design based on the calculated stress-based MAC.

In any implementations, the baseline component design may be associated with a gas turbine engine component.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses a system according to an implementation.
Figure 2 discloses a perspective view of a gas turbine engine component.
Figure 3 discloses a method of evaluating a component design according to an implementation.
Figure 4 discloses a method of evaluating a component design according to another implementation.
Figure 5 discloses a technique for determining a stress-based MAC value.
Figure 6 discloses a technique for mapping coordinates of a component design.
Figure 7 discloses a plot of steady state stress versus vibratory stress relative to high cycle fatigue (HCF) capability.

Like reference numbers and designations in the various drawings indicate like elements.

### DETAILED DESCRIPTION

This disclosure relates to establishing and/or validating component designs, including assessing fatigue of a proposed (e.g., perturbed) component design relative to a baseline component design based on a calculated MAC value associated with stress for one or more (e.g., vibratory) modes.

MAC may be used to determine how well two sets of modal vectors (e.g., mode shapes) match, which may be useful for validating (e.g., finite element) models against experimental data. The experimental data may be associated with a physical component corresponding to a baseline component design. The modes may be associated with one or more (e.g., natural) frequencies of the structure. A structure typically has different mode shapes for a set of frequencies.

MAC calculates a value between 0 and 1, where a value of 1 indicates that the two mode shapes are identical (e.g., collinear), and a value of 0 indicates that the two mode shapes are completely different (e.g., orthogonal). For displacement-based MAC, a force may be applied relative to displacement to obtain the correct absolute displacement. If the displacement modal vectors are completely orthogonal to one another at every node (e.g., structures moving in different directions), the displacement-based MAC value would be 0, whereas if the displacement modal vectors are the exact same (e.g., structures moving exactly the same), then the MAC value would be 1 for the respective mode.

There may be instances where the modal displacements associated with the baseline and perturbed designs match up to give a large displacement-based MAC value but the stress profile of the two structures may be visibly different. The difference in stress may be qualitatively observed and may be quantified using a known FEA tool. The FEA tool may be used to evaluate a stress response for the proposed component design. The FEA tool may be used to visualize the stress state. Obtaining a large displacement-based MAC value may give the false assumption that a percent Goodman of the baseline and perturbed structures are similar, when the stresses are actually different enough that the amount of similarity should not be assumed. The MAC values generated from the displacement may give values that are not representative of the stress state of the perturbed structure.

Calculating MAC based on stress may mitigate these issues. Stress values of the perturbed component design and the baseline component design may be obtained. The stresses in the elements may be obtained using a commercial tool such as Ansys. Each element may have its stresses located at each corner node of the element. The element type and its amount of corner nodes for that element may be used to obtain the stresses at the corner nodes for that element. Since adjacent elements may share corner nodes, nodes that share a location may have their stresses averaged by taking the mean of all overlapping nodes at that location. These mean stresses may be sorted by node number. The stress values may be arranged in respective vectors. Each component of the stress tensor may be put into the stress vector. The vectors may be normalized. The dot product of the two vectors may be determined to calculate a (e.g., node number matching) stress-based MAC value. This value is also on a scale of 0-1.

Various techniques such as Von Mises or principal stress may be used to interpret the stress response. A fatigue response of the perturbed component design may be evaluated. The calculated stress-based MAC value may be used to validate the determined fatigue response.

Utilizing the techniques disclosed herein, a more accurate determination of collinearity between a baseline design and a component design may be determined based on MAC. When considering fatigue assessment, a MAC result that is purely relevant to the stress can be utilized instead of the non-direct indicator of displacement. The stress-based MAC may be utilized alone or in combination with a displacement-based MAC. The stress-based MAC may quantify the difference in stress profiles over the component, which displacement-based MAC may only allude to rather than outright demonstrating.

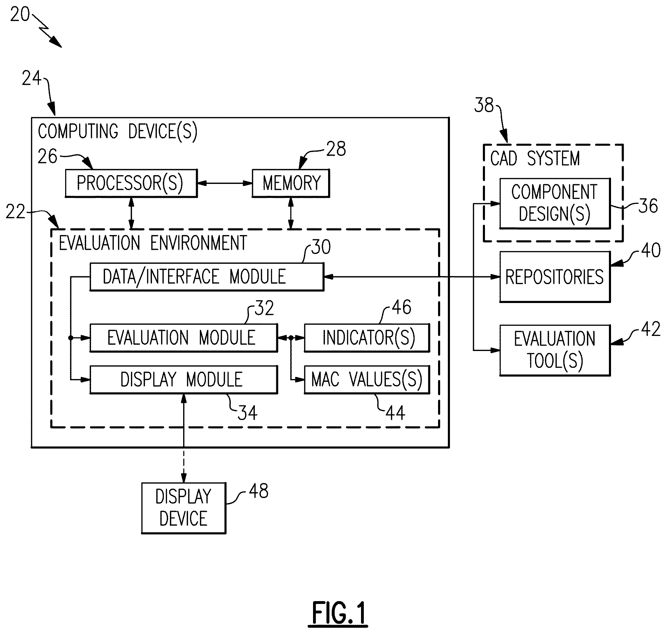

Figure 1 discloses a system 20 according to an implementation. The system 20 may be utilized to establish and/or evaluate (e.g., virtual) component designs, which may be associated with various as-manufactured physical components (e.g., parts), including one or more gas turbine engine components. The components may include one or more gas turbine engine components. The gas turbine engine components may include components of a propulsor, compressor, combustor and/or turbine, including airfoils and other parts having various geometries. The system 20 may be operable to evaluate (e.g., high cycle) fatigue for one or more component designs, including performing a high cycle fatigue similarity assessment. The system 20 may be operable to calculate and/or assign MAC value(s) to the respective component design. The system 20 may include an evaluation environment 22, which may be operable to calculate the MAC value(s).

The system 20 may include one or more computing device(s) 24 operable to execute the evaluation environment 22. The computing device 24 may include one or more computer processors 26, memory 28, storage means, network devices, input and/or output devices, and/or interfaces. The processor(s) 26 may be coupled to the memory 28. The processor(s) 26 may be collectively operable to execute the evaluation environment 22. The computing device 24 may be operable to execute one or more software programs, including one or more portions of the evaluation environment 22. The computing device 24 may be operable to communicate with one or more networks established by one or more computing devices. The memory may include UVPROM, EEPROM, FLASH, RAM, ROM, DVD, CD, a hard drive, cloud storages, or other computer readable medium which may store data and/or the functionality of this description. The computing device 24 may be a desktop computer, laptop computer, smart phone, tablet, or any other computing device. Input devices may include a keyboard, mouse and/or touchscreen. The output devices may include a monitor, speakers and/or printers. In implementations, the system 20 may be established by a cloud computing infrastructure including one or more of the computing devices 24. The functionality of the evaluation environment 22 and/or methods disclosed herein may be stored in a non-transitory computer-readable medium, including any of the memory devices disclosed herein. The non-transitory computer-readable medium may have computer-executable instructions that, when executed by the one or more processors 26, may cause the processor(s) 26 to individually and/or collectively execute the evaluation environment 22 to perform any of the functionality disclosed herein.

The evaluation environment 22 may include one or more modules. In implementations, the evaluation environment 22 may include a first (e.g., data or interface) module 30, second (e.g., evaluation) module 32 and/or third (e.g., display) module 34. Although three modules are disclosed, the evaluation environment 22 may include fewer or more than three modules, and the functionality of the modules may be combined and/or separated to provide the disclosed functionality.

Each component may be associated with a respective component design 36, which may be specified by a respective model-based definition (MBD). The component design 36 may be associated with any of the components disclosed herein, including a gas turbine engine component and/or assembly. The MBD may include a virtual three-dimensional (e.g., CAD) model, model derivative(s) and/or associated product manufacturing information (PMI). The CAD model may be generated by a CAD system 38. Various CAD systems may be utilized, such as CATIA, AutoCAD, Solidworks or Siemens NX. The PMI may include various information including tolerances and/or other dimensional requirements, and/or material requirements. The CAD model may include a virtual representation of the component.

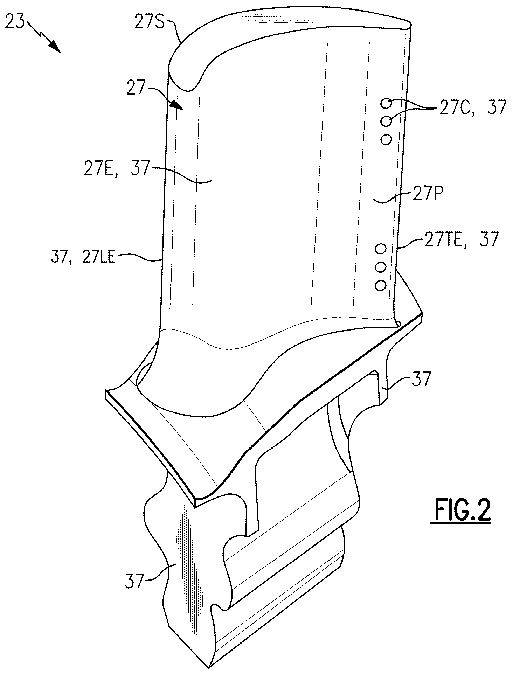

In the implementation of Figure 2, the component 23 may include an airfoil 27 having geometric features 37 such as an airfoil leading edge 27LE, pressure side 27P, suction side 27S, trailing edge 27TE, external surface contour 27E and cooling features (e.g., passages) 27C. The disclosed techniques may be utilized to evaluate other components of a gas turbine engine and/or components of other systems having various geometries.

Still referring to Figure 1, the data module 30 may be operable to interface with (e.g., access) one or more systems and/or information (e.g., data) sources, including one or more repositories 40. The repositories 40 may contain all the Design, Manufacturing, and Inspection (DMI) data associated with the component design(s) 36. The data module 30 may be operable to access information stored in the repositories 40. Entries in the repositories 40 may be associated with one or more component designs 36. The data module 30 may be operable to read, write, edit, store and/or otherwise access information in the repositories 40.

The system 20 may include and/or may interface with one or more evaluation tools 42. Various evaluation tools may be utilized, including any of the tools disclosed herein such as FEA modeling and computational fluid dynamics (CFD) tools. Commercial evaluation tools may include Abaqus, Ansys, Simcenter and Star CCM. The evaluation environment 22 and/or another portion of the system 20 may be operable to interface with the evaluation tool(s) 42.

The evaluation module 32 may be operable to calculate and/or assign MAC value(s) 44 associated with the respective component design(s) 36. In implementations, the component designs 36 may include a first (e.g., baseline) component design and/or a second (e.g., perturbed) component design. The MAC value 44 assigned to the perturbed component design may be based on one or more characteristics of the baseline and/or perturbed component designs. The characteristics may include one or more stress values associated with one or more finite elements of the respective component design. The stress values may be calculated, simulated and/or measured during evaluation of a physical component utilizing known techniques, such as by an FEA solver.

The evaluation module 32 may be operable to calculate the MAC value(s) 44 utilizing any of the techniques disclosed herein. The evaluation module 32 may be operable to generate one or more indicators 46 based on the MAC value(s) 44. The indicators 46 may include the MAC value(s) 44 and/or whether or not the MAC value(s) meet one or more preselected criterion (e.g., thresholds). The display module 34 may be operable to display the MAC value(s) 44 and/or associated indicator(s) 46 in a display device 48.

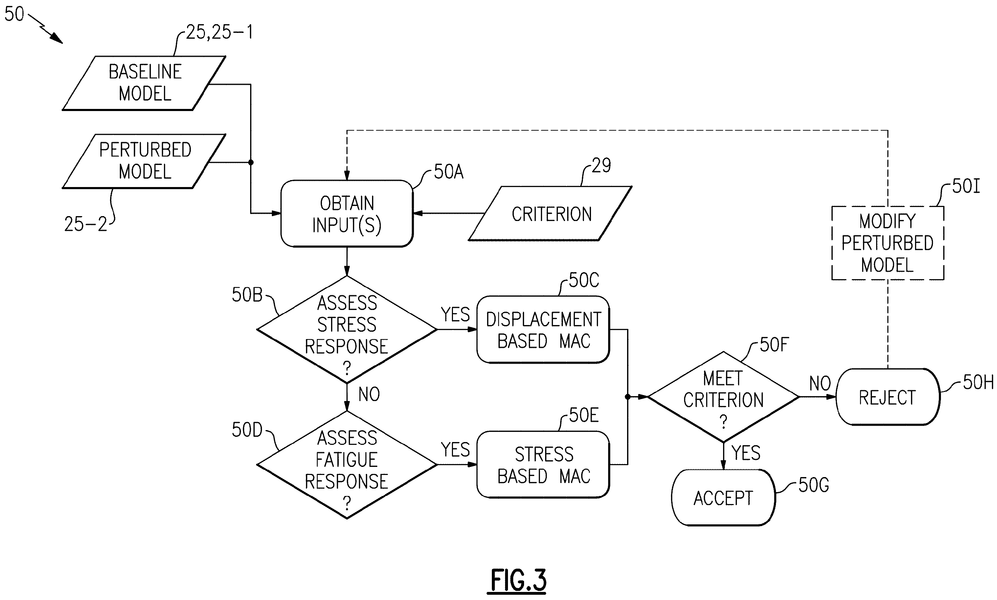

Figure 3 discloses a method in a flowchart 50 for evaluating (e.g., high cycle) fatigue for a component design according to an implementation. The method 50 may include performing a high cycle fatigue similarity assessment. The method 50 may be utilized to assign a MAC value to the component design. The similarity assessment may be based on the MAC value. In implementations, the component design may be a perturbed component design and may be compared to a baseline component design. The baseline and/or perturbed component designs may be associated with a respective component (e.g., part or structure), including any of the gas turbine engine component disclosed herein. The baseline design may be associated with a blueprint or a physical component. Material may be added or removed from the baseline design to establish the perturbed design. The MAC value may be calculated utilizing any of the techniques disclosed herein. Fewer or additional steps than are recited below could be performed within the scope of this disclosure, and the recited order of steps is not intended to limit this disclosure. The evaluation environment 22 may be programmed with logic for performing the method 50. Reference is made to the system 20 (Figure 1).

At block 50A, one or more inputs may be obtained. The inputs may include any of the information disclosed herein. The inputs may include one or more virtual two-dimensional (2D) and/or three-dimensional (3D) design models 25, which may be associated with respective component designs 36 and/or components. The design models 25 may be established by the CAD system 38. In implementations, the models 25 may include a first (e.g., baseline) model 25-1 and/or a second (e.g., perturbed) model 25-2. Block 50A may include accessing the baseline model 25-1, which may be associated with a baseline component design 36 and/or baseline component. A baseline set of finite elements may be associated with a volume of the design model 25-1 of the baseline component design 36. Block 50A may include accessing the perturbed component design 25-2, which may be associated with a second (e.g., perturbed) component design 36. The perturbed component design 36 may be associated with a second (e.g., perturbed) component that may differ from the baseline component. The perturbed model 25-2 may be a derivative of, or may otherwise differ from, the baseline model 25-1. A second (e.g., perturbed) set of finite elements may be associated with a volume of the design model 25-2 of the perturbed component design. The models 25-1, 25-2 may include displacement and/or stress values associated with one or more (e.g., vibratory) modes. The inputs may include the displacement and/or stress values. The inputs may include one or more criterion 29. The criterion 29 may be used to specify how similar the stress and/or fatigue response of the perturbed model 25-2 may need to be relative to the stress and/or fatigue response of the baseline model 25-1 (e.g., a degree of collinearity). The criterion 29 may include a preselected threshold associated with MAC. In implementations, the preselected threshold may be associated with a minimum matching (e.g., similarity) requirement between the perturbed model 25-2 and the baseline model 25-1 for the respective mode(s).

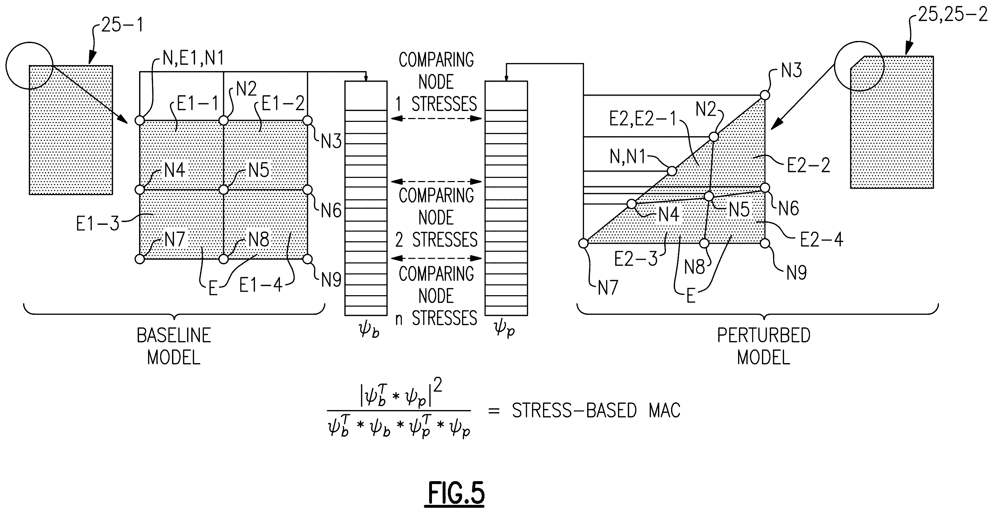

At block 50B, a determination may be made whether or not to assess a stress response of the perturbed model 25-2. If the determination is YES, then a displacement-based MAC value may be calculated for the perturbed model 25-2 with respect to the baseline model 25-1 at block 50C. Calculating a MAC value based on displacement is known. However, utilizing a displacement-based MAC value in accordance with the techniques disclosed herein is not known. If the determination at block 50B is NO, then a determination may be made whether to assess a (e.g., high cycle) fatigue response of the perturbed model 25-2 at block 50D. If the determination is YES, then a stress-based MAC value may be calculated for the perturbed model 25-2 with respect to the baseline model 25-1 at block 50E. Calculating the displacement-based MAC at block 50C may differ from calculating the stress-based MAC at block 50E. The calculated MAC values may also differ. Block 50E may include calculating at least one stress-based MAC value for the design model 25-2 associated with the perturbed component design 36 based a comparison between nodal stresses associated with respective (e.g., corner) nodes of the baseline set of finite elements and nodal stresses associated with respective (e.g., corner) nodes of the perturbed set of finite elements (e.g., elements E1, E2 of Figure 5).

Block 50E may include mapping the nodes of the perturbed set of finite elements to the nodes of the baseline set of finite elements. Block 50E may include interpolating the nodal stresses associated with one or more of the nodes of the perturbed set of finite elements based on the mapping.

The nodal stresses may be associated with a respective set of (e.g., vibratory) modes, including any of the modes disclosed herein. Block 50E may include calculating a set of stress-based MAC values associated with the respective modes. For baseline and perturbed corresponding modes, a stress-based MAC calculation may be determined to quantify similarity of nodal stresses.

Block 50C and/or 50E may include assigning the calculated MAC value to the perturbed model 25-2. In implementations, blocks 50B-50C may be omitted. Calculating MAC based on stress rather than displacement may reduce a likelihood of obtaining a false indication of similarity of fatigue capability (e.g., life) of the perturbed model 25-2 based on the baseline model 25-1.

Method 50 may include validating the results of a finite elemental analysis of the perturbed component design 36 based on the calculated stress-based MAC. At block 50F, a determination may be made whether one or more of the criterion 29 are met based on the MAC value assigned to the perturbed model 25-2. In implementations, the assigned MAC value may be compared to a preselected threshold associated with MAC (e.g., degree of collinearity). At block 50G, the perturbed model 25-2 may be accepted in response to meeting the one or more criterion 29, such as the assigned MAC value exceeding or otherwise meeting the preselected threshold. At block 50H, the perturbed model 25-2 may be rejected in response to not meeting the one or more criterion 29, such as the assigned MAC value being below or otherwise not meeting the preselected threshold. The evaluation module 32 may be operable to accept the perturbed component design 36 in response to the stress-based MAC value meeting the predetermined (e.g., preselected) criterion but may be operable to reject the perturbed component design 36 in response to the stress-based MAC value not meeting the predetermined criterion. In implementations, the method 50 may include revising a geometry and/or other aspect (e.g., material) of the perturbed model 25-2 at block 50I and then recalculating the MAC. The revisions may include adjusting a geometry of the perturbed model 25-2 to more closely match a geometry of the baseline model 25-1. One or more iterations of the block(s) of the method 50 may be performed until the MAC value meets the preselected threshold and/or one or more other criterion 29. The method 50 may include accepting the perturbed component design 36 based on the at least one stress-based MAC value meeting a (e.g., preselected) threshold at block 50G, but may include rejecting the perturbed component design 36 in response to the stress-based MAC value being below the preselected threshold.

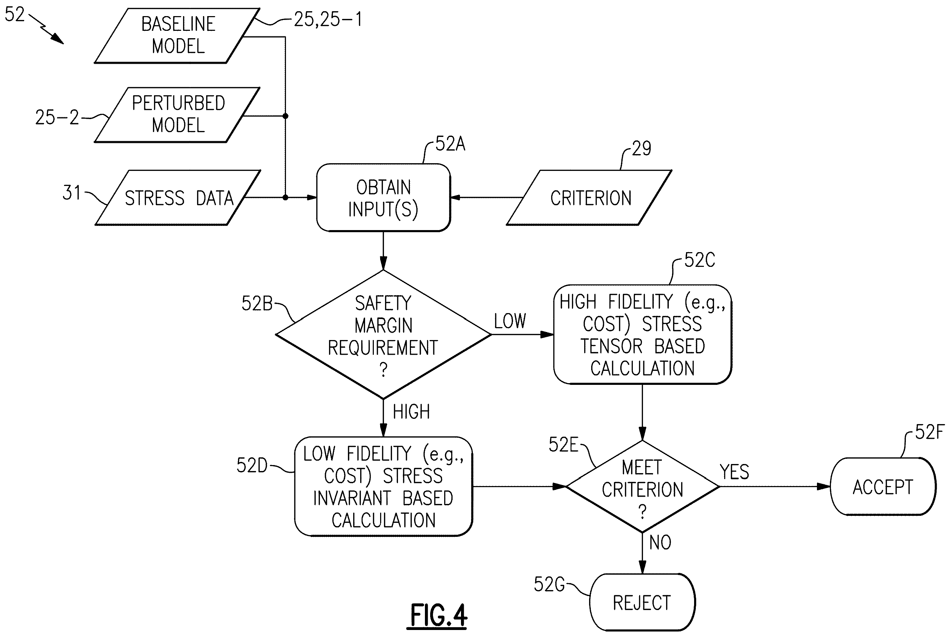

Figure 4 discloses a method in a flowchart 52 for evaluating (e.g., high cycle) fatigue for a component design according to another implementation. The method 52 may be utilized to assign a (e.g., stress-based) MAC value to the component design. In implementations, the component design may be a perturbed component design and may be compared to a baseline component design. The MAC value may be calculated utilizing any of the techniques disclosed herein. Fewer or additional steps than are recited below could be performed within the scope of this disclosure, and the recited order of steps is not intended to limit this disclosure. The method 52 may incorporate any of the features of method 50, and vice versa. The evaluation environment 22 may be programmed with logic for performing the method 52. Reference is made to the system 20 (Figure 1).

At block 52A, one or more inputs may be obtained, including any of the inputs disclosed herein. The inputs may include the baseline model 25-1 and/or perturbed model 25-2. The inputs may include stress data (e.g., values) 31 associated with the respective models 25-1, 25-2. The inputs may include one or more criterion 29, including any of the criterion disclosed herein. The criterion 29 may include a safety margin requirement.

At block 52B, a determination may be made based on one or more of the criterion 29, such as the safety margin requirement. The safety margin requirement may be associated with a range, such as a low margin and/or high margin. If the safety margin is low, then a relatively high fidelity (e.g., cost) stress tensor-based calculation of MAC may be determined at block 52C. If the safety margin is relatively high, then a relatively low fidelity stress invariant-based calculation of MAC may be determined at block 52D. The relatively lower fidelity technique may reduce an amount of data used to calculate the MAC value in comparison to the higher fidelity technique. In implementations, the low fidelity technique may be used to compare one stress value, whereas the high fidelity technique may be used to compare two or more stress values, such as six stress values (e.g., stress in every direction and off directions).

At block 52E, a determination may be made whether one or more of the criterion 29 are met based on the MAC value assigned to the perturbed model 25-2. In implementations, the assigned MAC value may be compared to a preselected threshold associated with MAC. At block 52F, the perturbed model 25-2 may be accepted in response to meeting the one or more criterion 29, such as the assigned MAC value exceeding or otherwise meeting the preselected threshold. At block 52G, the perturbed model 25-2 may be rejected in response to not meeting the one or more criterion 29, such as the assigned MAC value being below or otherwise not meeting the preselected threshold. The method 52 may include revising a geometry and/or other aspect of the perturbed model 25-2 and then recalculating the MAC. One or more iterations of the block(s) of the method 52 may be performed until the MAC value associated with an iteration of the perturbed model 25-2 meets the preselected threshold and/or one or more criterion 29.

Various techniques may be utilized to calculate MAC based on stress values associated with a respective component design for one or more vibratory modes. Referring to Figure 5, with continuing reference to Figure 1, a technique for calculating stress-based MAC value(s) for a second (e.g., perturbed) design model 25-2 associated with a component design 36 is disclosed. In the implementation of Figure 5, a stress-based MAC value may be calculated based on stress values for a first (e.g., baseline) design model 25-1 and the perturbed design model 25-2.

The data module 30 may be operable to access the baseline design model 25-1, which may be associated with a first (e.g., baseline) component design 36 and/or baseline component. The data module 30 may be operable to access the perturbed design model 25-2, which may be associated with a second (e.g., perturbed) component design 36 and/or second (e.g., perturbed) component. The second component may differ from the baseline component in one or more aspects, including a geometry and/or material composition. The perturbed model 25-2 and/or associated perturbed component design 36 may be a derivative of the baseline model 25-1 and/or associated baseline component design 36. The baseline and/or perturbed component designs 36 may be associated with a gas turbine engine component, including any of the components disclosed herein.

A volume of the respective design model 25 may be divided into a plurality of finite elements E, which may be on an order of hundred(s) of thousands and/or million(s) of finite elements. The elements E may correspond to positions along the component (e.g., airfoil). In the implementation of Figure 5, the elements E are depicted as two-dimensional (2D) areas. However, the elements E may be three-dimensional (3D) volumes. The number of finite elements E associated with the baseline and perturbed models 25-1, 25-2 may be the same or may differ. Various techniques may be utilized to establish the elements E, such as with a known FEA tool. Each finite element E may be associated with one or more nodes N. Each finite element E may be associated with a respective set of (e.g., corner) nodes N. The nodes N may be established at corners of a volume of the respective finite element E. The nodes N may serve as points that may associate (e.g., tie) the adjacent elements E together.

Each element E may be associated with a respective data structure (e.g., array), which may be populated with stress values. Two respective data sets associated with the baseline model 25-1 and the perturbed model 25-2 may be established.

The elements E may include a first (e.g., baseline) set of finite elements E1 and/or a second (e.g., perturbed) set of finite elements E2. The baseline set of finite elements E1 may be associated with a volume of the baseline design model 25-1. The perturbed set of finite elements E2 may be associated with a volume of the perturbed model 25-2. In implementations, the evaluation module 32 may be operable to assign (e.g., map) each element E2 and/or associated node N of the perturbed model 25-2 to a respective element E1 and/or associated node N of the baseline model 25-1. A geometry and/or volume of the pairs of mapped elements E1, E2 may be the same or may differ. A position of the pairs of mapped nodes N may be the same (e.g., nodes N3 of elements E1-2, E2-2) or may differ (e.g., nodes N1 of elements E1-1, E2-1). The evaluation module 32 may be operable to assign the elements E2 of the perturbed model 25-2 to the elements E1 of the baseline model 25-1 based on a relative fit between the associated volumes of the design models 25-1, 25-2.

The evaluation module 32 may be operable to calculate at least one or more stress-based MAC values 44 for the perturbed component design 36 based a comparison between nodal stresses associated with a respective set of (e.g., corner) nodes N of the baseline set of finite elements E1 and nodal stresses associated with a respective set of (e.g., corner) nodes N of the perturbed set of finite elements E2. In implementations, the nodal stresses may be averages (e.g., a mean) of stress contributions from all elements E connected to the respective corner nodes N (e.g., a mean of all nodal stresses associated with node N5 of the sets of elements E1, E2).

The elements E1, E2 may be associated with respective stress tensors, which may be represented in vector form. The evaluation environment 32 may be operable to calculate a first (e.g., baseline) stress vector *ψ_{b}* including components of the nodal stress of the nodes N of the baseline set of finite elements E1. The evaluation environment 32 may be operable to calculate a second (e.g., perturbed) stress vector *ψₚ* including components of the nodal stress of the nodes N of the second set of finite elements E2. In the implementation of Figure 5, an n-number of the nodes N of the vectors *ψ_{b}*, *ψₚ* may be associated with a full stress tensor.

One or more stresses may be associated with the stress tensor and/or associated vector. The stress tensor may include any number of stress results for the respective element E. In the implementation of Figure 5, the stress tensor includes the normal stresses, *σₓ, σ_{y}, σ_{z},* and shear stresses, *τ_{xy}, τ_{xz}, τ_{yz}.* In implementations, the vectors *_{b}*, *ψₚ* may be associated with only one stress. A stress tensor may include 9 components, which is known. The components of the stress tensor may describe internal forces within a solid body under external forces. These may consist of three normal stresses and six shearing stresses, which may represent forces per unit area acting on specific surfaces within the solid body. The components of a stress tensor (T) may be expressed in a 3x3 matrix having three diagonal components (e.g., Txx, Tyy, Tzz) and six off-diagonal components (e.g., Txy, Txz, Tyx, Tyz, Tzx, Tzy). In the implementation of Figure 5, the stress σ may include a normal of the stress in the x, y and z directions. The stress τ may include shear in the xy, xz and yz planes (e.g., xy being x surface in y direction). Because shear stresses are symmetrical, three of the components of stress may be omitted. The stress values may be used to calculate principal stress. The stress tensor, principal stresses, or formulation made with the principal stresses can be used to calculate stress-based MAC by comparing the values of them at each node.

The nodal stresses associated with respective corner nodes N of the baseline set of finite elements E1 may be associated with experimental data for a physical instance of the baseline component. In other implementations, the nodal stresses associated with the nodes N of the baseline set of finite elements E1 may be based on one or more simulations, which may be performed by a known evaluation tool including any of the evaluation tools disclosed herein such as Ansys.

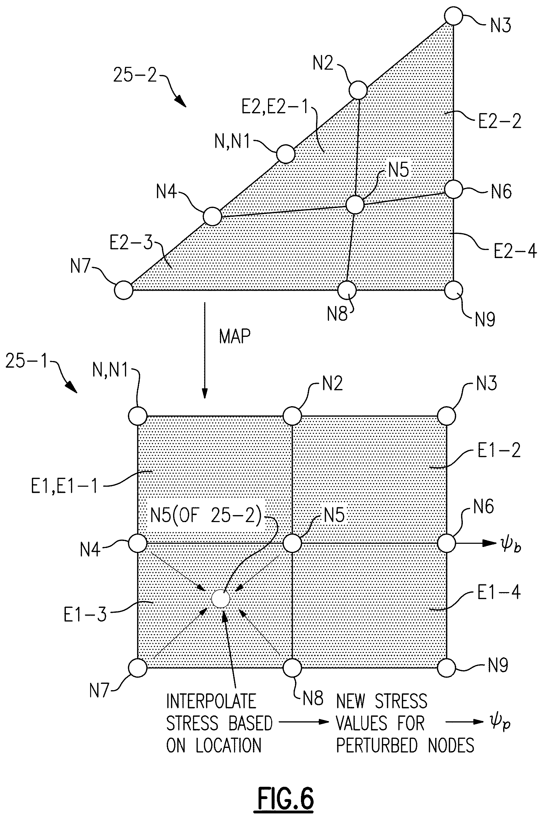

The stress values associated with the design model 25 may be arranged into a single respective stress vector, such as the vectors *ψ_{b}, ψₚ* associated with the respective baseline and perturbed design models 25-1, 25-2. Each of the vectors *ψ_{b}*, *ψₚ* may include a set of component stresses, which may be arranged in an array by node N (e.g., σₓ₁, σ_{y1}, σ_{z1}, τ_{xy1}, τ_{xz1}, τ_{yz1}, σₓ₂, σ_{y2}, σ_{z2}, τ_{xy2}, τ_{xz2}, τ_{yz2}, etc.). The stress values may be reorganized (e.g., sequentially) by node N. The component stresses of the respective nodes N may be compared to each other to calculate the stress-based MAC value. In other implementations, component stresses at coordinate locations may be compared to each other (e.g., Figure 6).

The nodal stresses may be associated with a respective vibratory mode. The vibratory mode(s) may be associated with a steady stress. Steady stress refers to a semi-constant, non-vibratory stress level. Vibratory stress refers to stress that fluctuates or changes over time, which may occur in a cyclical manner. The nodal stresses used for the stress-based MAC may include a combination of vibratory stresses and steady stresses associated with the respective nodes N. Vibratory stresses may be associated with respective (e.g., natural) frequencies of the component. The evaluation module 32 may be operable to calculate a stress-based MAC value for one or more of the respective modes. In implementations, a set of stress-based MAC values may be calculated for one or more respective modes. The set of stress-based MAC values may be associated with the respective modes. The implementation of Figure 5 depicts a technique for calculating a MAC value for a single mode, but it may be utilized to calculate respective MAC values for any number of modes.

The evaluation environment 32 may be operable to calculate a stress-based MAC value based on the baseline stress vector *ψ_{b}* and the second stress vector *ψₚ.* The evaluation environment 32 may be operable to calculate the stress-based MAC value based on a normalization of the baseline stress vector *ψ_{b}* and the perturbed stress vector *ψₚ*, which may with respect to the perturbed stress vector *ψₚ*. FEA results may be relative. The stress vectors *ψ_{b}*, *ψₚ* may be normalized because an amplitude of the stress may differ. Normalizing the stress vectors *ψ_{b}*, *ψₚ* may make the magnitude of FEA results real. To normalize the stress vectors *ψ_{b}, ψₚ*, a peak value of the respective vector *ψ_{b}, ψₚ*, may be divided by the whole vector *ψ_{b}, ψₚ.*

The corner nodes N may be averaged (e.g., simple average or mean stress). The mean stress may be calculated by a known commercial tool such as Ansys. Average nodal stresses may be calculated by averaging the stress contributions from all of the elements E connected to the node N.

In implementations, a single baseline stress vector *ψ_{b}* and/or a single perturbed stress vector *ψₚ* may be associated with all nodes N of the respective design model 25-1, 25-2. A single stress-based MAC value may be calculated for all nodes N (e.g., Figure 5) and/or coordinates (e.g., Figure 6) of the perturbed model 25-2. The stress-based MAC value may be associated with an entire volume of the design model 25-2, or may be associated with only a (e.g., localized) portion of the volume.

The stress-based MAC value may be calculated based on the following formula: Equation 1: $Stress - based MAC = \left({\left|{{ψ}_{b}}^{T}*{ψ}_{p}\right|}^{2}\right) / \left({{ψ}_{b}}^{T}*{ψ}_{b}*{{ψ}_{p}}^{T}*{ψ}_{p}\right)$ where *ψ_{b}* is the baseline stress vector, *ψ_{b}*^{T} is a transpose of the baseline stress vector, *ψₚ* is the perturbed stress vector, *ψₚ*^{T} is a transpose of the perturbed stress vector, and the symbol * refers to the dot product of the associated vectors. The stress-based MAC may be a scalar value between 0 and 1, inclusive. The baseline and perturbed stress vectors are normalized with respect to the perturbed stress vector. The calculated stress-based MAC may be a 1x1 array with a single value.

The evaluation module 32 may be operable to determine whether the perturbed component design 36 meets at least one or more preselected (e.g., design) criterion based on the stress-based MAC value. The evaluation module 32 may be operable to generate one or more indicators 46 based on the stress-based MAC value 44, which may include any of the indicators disclosed herein.

Figure 6 discloses a coordinate-based technique for establishing the perturbed stress vector *ψₚ*, which may be utilized to calculate a stress-based MAC value for a component design 36. The baseline and perturbed models 25-1, 25-2 may differ such that a position of one or more of the (e.g., corner) nodes N of the baseline set of finite elements E1 may differ from a position of one or more of the (e.g., corner) nodes N of the perturbed set of finite elements E2. In some implementations, the geometry for a localized portion of the components may be the same but the positions of the geometry may differ (e.g., may be offset).

The evaluation module 32 may be operable to map the nodes N of the perturbed set of finite elements E2 to the nodes N of the baseline set of finite elements E1. Various techniques may be utilized to map the nodes N, such as proximity. In the implementation of Figure 6, the nodes N1-N2, N4-N6 and N8 may be fit based on the location of the nodes N3, N7 and N9, which may be at the same coordinates for the elements E1, E2. The evaluation module 32 may be operable to map the stress data associated with nodes N of the elements E1 of the baseline model 25-1 to the nodes N of the elements E2 of the perturbed model 25-2. The evaluation module 32 may be operable to interpolate the nodal stresses associated with one or more of the nodes N of the second set of finite elements E2 based on the mapping. The nodal stresses may be interpolated based on a location of the node N of the perturbed model 25-2 relative to the adjacent nodes N of the baseline model 25-1, such as node N4 of the perturbed model 25-2 relative to nodes N4, N5, N7 and N8 of the baseline model 25-1. The evaluation module 32 may be operable to assign the interpolated stress values to the respective nodes N of the finite elements E2 to establish the perturbed stress vector *ψₚ* (see Figure 5). The stress-based MAC value may be calculated using the interpolated stress values based on the formula disclosed above.

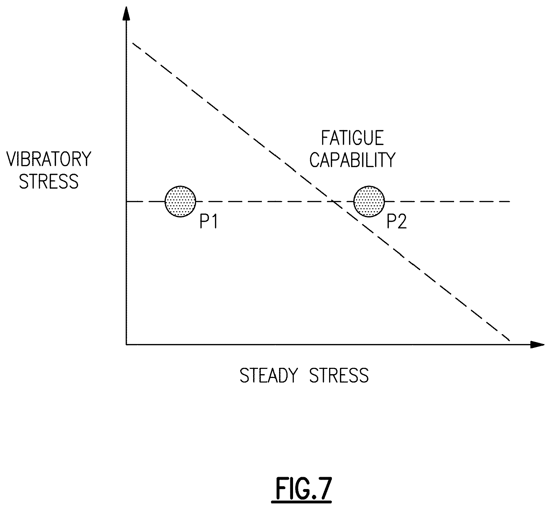

The fatigue capability of the perturbed component may be evaluated using a Goodman diagram. Figure 7 discloses a plot of steady state stress versus vibratory stress relative to high cycle fatigue (HCF) capability, known in industry as a Straight-Line Goodman plot or capability Diagram. A Goodman diagram consists of points plotted representing the stress state at one or more locations. The high cycle fatigue capability may be determined for one or more modes. Fatigue capability may be associated with material composition. Steady stress may be associated with rotation, temps, other loads. Steady stress may be plotted along an x-axis. Vibratory stress may be plotted along a y-axis. The vibratory stress may be evaluated relative to a preselected criterion (e.g., requirement). The fatigue capability may establish a (e.g., stress) limit represented as a line on a plot of vibratory stress with respect to steady stress. The stress-based MAC may be used with the Goodman diagram to assess relative HCF fatigue capability and the need for higher fidelity analysis. Prior techniques only considered vibratory displacement in the context of MAC, whereas the disclosed techniques may consider steady stress and vibratory stress in the context of MAC. A component design may be assumed to have a value at point P1 based on the acceptance of the criteria 29 using prior techniques. This acceptance of criteria would assume similarity and therefore the point P1, for the perturbed design, would be located at the same vibratory stress and steady stress location as the baseline design in the Goodman diagram. The point P1 only considered peak vibratory stress and mode shape to assume similarity to the baseline design instead of where the perturbed design peak vibratory location could have moved to a relatively higher steady stress location. The component design may be assumed to have a value at point P2 based on the acceptance criteria 29 using the techniques disclosed herein. The criteria 29 may result in the perturbed design being rejected, which would result in a point P2 with a similar vibratory stress but a relatively higher steady stress than point P1 on the Goodman diagram. Using stress vector as the inputs to similarity between the baseline and perturbed designs may provide a better fatigue assessment, since the difference in location of the peak stress in the stress contour is accounted for in the methods described herein compared to prior MAC calculation techniques. If the perturbed component design 36 meets the predetermined criterion 29, then the perturbation may be accepted as similar for the associated process, and the same Goodman diagram for the baseline component design 36 may be used to assess component capability for the perturbed component design 36.

Assessing the stress response may be determined using displacement-based MAC, since the displacement-based MAC takes into account the mode shape of the component (e.g., airfoil) to predict the stresses seen in the component due to the unsteady (e.g., aerodynamic) loads assumed to be the main driver, but may not necessarily predict the same stress contours between components (e.g., blades) at high displacement MAC values since it relies purely on mode shape. Displacement-based MAC may be good at determining the unsteady (e.g., aerodynamic) stress that the component (e.g., airfoil) may experience, but not necessarily where those stresses are occurring. The stress-based MAC, however, considers stresses at each node, which may be used to a view the stress contour and identify where the stress magnitudes are occurring, to see if the peak is in the same location on both components (e.g., blades).

By using the displacement-based MAC technique, a spot at P1 on the plot of Figure 7 may be established which shows the most limiting node on the component. With the stress-based MAC technique, point P2 may be established having the same peak vibratory stress (y-location of P1) but a different steady stress (x-location). If the stress moves to the left on the Goodman plot (e.g., from P1), the capability of the perturbed component may be acceptable, but if it moves too far to the right (e.g., from P1 to P2), then the perturbed component may not meet capability requirements. This may occur if the perturbed component passed the criteria assessment with a high enough displacement-based MAC value, then it would be assigned to the same capability unless further testing deemed otherwise; however, if the stress contours showed that the peak vibratory stress was not in an area of the component that had low steady stress (as shown in point P1) but was now in an area of high steady stress, then the perturbed component would fail its capability assessment while still passing the displacement-based MAC criteria. The stress-based MAC technique may reduce a likelihood of this scenario possibly occurring by taking into account a stress contour of the perturbed component. If the previous example occurred where the new peak vibratory stress is in an area of high steady stress, the difference in peak stress location will result in a lower stress-based MAC value, since the stress contours will not be similar, leading to the perturbed component not being seen as having higher capability than it actually has. The disclosed techniques may be used to provide a relatively more robust design.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system for evaluating fatigue for a component design comprising:
one or more processors coupled to memory, the one or more processors collectively operable to execute an evaluation environment, and the evaluation environment operable to:
access a baseline component design associated with a baseline component, wherein a baseline set of finite elements are associated with a volume of the baseline component design;
access a second component design associated with a second component that differs from the baseline component, wherein a second set of finite elements are associated with a volume of the second component design;
calculate at least one stress-based MAC value for the second component design based a comparison between nodal stresses associated with respective corner nodes of the baseline set of finite elements and nodal stresses associated with respective corner nodes of the second set of finite elements; and
generate an indicator based on the at least one stress-based MAC value.

2. The system as recited in claim 1, wherein the second component design is a derivative of the baseline component design.

3. The system as recited in claim 1 or 2, wherein:
the nodal stresses are associated with a respective set of vibratory modes, and the set of vibratory modes are associated with a steady stress; and
the at least one stress-based MAC value includes a set of stress-based MAC values associated with the respective modes.

4. The system as recited in claim 1, 2 or 3, wherein the evaluation environment is operable to:
accept the second component design in response to the at least one stress-based MAC value meeting a predetermined criterion, but reject the second component design in response to the at least one stress-based MAC value not meeting the predetermined criterion.

5. The system as recited in any preceding claim, wherein:
the nodal stresses are averages of stress contributions from all elements connected to the respective corner nodes.

6. The system as recited in any preceding claim, wherein the evaluation environment is operable to:
calculate a baseline stress vector including components of the nodal stress of the nodes of the baseline set of finite elements;
calculate a second stress vector including components of the nodal stress of the nodes of the second set of finite elements; and
calculate the at least one stress-based MAC value based on the baseline stress vector and the second stress vector; and
optionally wherein the evaluation environment is operable to:
calculate the at least one stress-based MAC value based on a normalization of the baseline stress vector and the second stress vector with respect to the second stress vector.

7. The system as recited in any preceding claim, wherein a position of one or more of the corner nodes of the baseline set of finite elements differs from a position of one or more of the corner nodes of the second set of finite elements, and the evaluation environment is operable to:
map the corner nodes of the second set of finite elements to the corner nodes of the baseline set of finite elements.

8. The system as recited in claim 7, wherein the evaluation environment is operable to:
interpolate the nodal stresses associated with one or more of the corner nodes of the second set of finite elements based on the mapping.

9. The system as recited in any preceding claim, wherein the baseline component design is associated with a gas turbine engine component.

10. A non-transitory computer-readable medium having computer-executable instructions that, when executed by one or more processors, cause the one or more processors to collectively:
access a first component design associated with a first component, wherein a first set of finite elements are associated with a volume of the first component design;
access a second component design associated with a second component that differs from the first component, wherein a second set of finite elements are associated with a volume of the second component design;
calculate at least one stress-based MAC value for the second component design based a comparison between nodal stresses associated with respective corner nodes of the first set of finite elements and nodal stresses associated with respective corner nodes of the second set of finite elements; and
determine whether the second component design meets at least one preselected design criterion based on the at least one stress-based MAC value; optionally wherein:
the second component design is a derivative of the first component design.

11. The non-transitory computer-readable medium as recited in claim 10, wherein:
the nodal stresses are associated with a respective set of modes; and
the at least one stress-based MAC value includes a set of stress-based MAC values associated with the respective modes;
optionally wherein:
the set of modes include a first mode associated with steady state stress and a second mode associated with vibratory stress.

12. A method for evaluating fatigue for a component design comprising:
accessing a baseline component design associated with a baseline component, wherein a baseline set of finite elements are associated with a volume of the baseline component design;
accessing a second component design associated with a second component that differs from the baseline component, wherein a second set of finite elements are associated with a volume of the second component design;
calculating at least one stress-based MAC value for the second component design based a comparison between nodal stresses associated with respective corner nodes of the baseline set of finite elements and nodal stresses associated with respective corner nodes of the second set of finite elements; and
accepting the second component design based on the at least one stress-based MAC value meeting a preselected threshold, but rejecting the second component design in response to the at least one stress-based MAC value being below the preselected threshold.

13. The method as recited in claim 12, wherein:
the second component design is a derivative of the baseline component design;
the nodal stresses are associated with a respective set of modes; and
the at least one stress-based MAC value includes a set of stress-based MAC values associated with the respective modes.

14. The method as recited in claim 13, wherein the set of modes includes one or more vibratory modes associated with a steady stress, and further comprising:
performing a fatigue assessment of the second component design with respect to fatigue capability.

15. The method as recited in any of claims 12 to 14, wherein the nodal stresses associated with respective corner nodes of the baseline set of finite elements are associated with experimental data for a physical instance of the baseline component, and further comprising:
validating the results of a finite elemental analysis of the second component design based on the calculated stress-based MAC.
